# EUROPÄISCHE PATENTSCHRIFT

(11) **EP 2 748 235 B1**
(45) Veröffentlichungstag und Bekanntmachung des Hinweises auf die Patenterteilung: **20.12.2017**
(21) Anmeldenummer: 12750767.1
(22) Anmeldetag: 24.08.2012
(51) Int. Cl.: B29C 70/48, C08J 5/24

(54) **VERFAHREN ZUR HERSTELLUNG VON FORMTEILEN**
PROCESS FOR PRODUCING MOULDED PARTS
PROCÉDÉ DE PRODUCTION DE PIÈCES MOULÉES

(30) Priorität: 26.08.2011 EP 11179015; 27.09.2011 EP 11182876
(43) Veröffentlichungstag der Anmeldung: 02.07.2014
(73) Patentinhaber: BASF SE, 67056 Ludwigshafen am Rhein (DE)
(72) Erfinder: RADTKE, Andreas, 68161 Mannheim (DE); DESBOIS, Philippe, 68535 Edingen-Neckarhausen (DE); WOLLNY, Andreas, 67063 Ludwigshafen (DE)
(74) Vertreter: BASF IP Association
(86) Internationale Anmeldenummer: PCT/EP2012/066487
(87) Internationale Veröffentlichungsnummer: WO 2013/030103

(56) Entgegenhaltungen:
- EP-A1- 1 178 074
- EP-A1- 2 489 499
- DD-A1- 271 522
- DE-A1- 4 041 522
- GB-A- 1 384 060
- DATABASE WPI Week 199321 Thomson Scientific, London, GB; AN 1993-172223 XP002689239, & JP 5 104571 A (SUMITOMO RUBBER IND LTD) 27. April 1993 (1993-04-27)

## Beschreibung

Die Erfindung betrifft ein Verfahren zur Herstellung von Formteilen aus einem faserverstärkten Polymeren.

Faserverstärkte Polymere finden Einsatz in Bereichen, in denen Werkstoffe mit hoher Festigkeit und geringerem Gewicht als Metalle eingesetzt werden sollen. Insbesondere finden faserverstärkte Polymere verstärkt Einsatz im Automobilbau, um die Masse von Fahrzeugen zu senken und damit den Kraftstoffverbrauch.

Zur Herstellung von faserverstärkten Polymeren ist es bekannt, zunächst Fasern in ein Formwerkzeug einzulegen und diese anschließend mit dem Polymeren zu umspritzen. Bei der Herstellung von duroplastischen Werkstoffen hat dies den Nachteil, dass eine Halbzeugfertigung nicht möglich ist. Auf diese Weise können lediglich bereits die fertig konfektionierten Kunststoffteile hergestellt werden. Bei der Herstellung von Formteilen hat dieses in Abhängigkeit der Fülldrücke den Nachteil, dass die eingesetzten Gewebe zur Faserverstärkung durch Fließeffekte verschoben und deformiert werden.

Neben faserverstärkten duroplastischen Werkstoffen finden in letzter Zeit so genannte Organobleche, das heißt vollkonsolidierte endlosfaserverstärkte thermoplastische Polymere mit Gewebe- oder Gelegeverstärkung verstärkten Einsatz. Diese Organobleche können im Spritzgießverfahren mit Polymeren durchspritzt werden, wenn die Organobleche dünn genug sind oder über Schmelztemperatur aufgeheizt werden.

Weiterhin werden insbesondere bei Einsatz von Spritzgießverfahren zur Herstellung der Bauteile hohe Fülldrücke benötigt, um große Druckverluste beim Durchspritzen des Gewebes ausgleichen zu können. Abschließend führt das Verschieben des Gewebes durch Fließeffekte dazu, dass das Gewebe aus der intendierten Richtung gebracht wird. Bei Verwendung von Stahlgeweben oder Steelcords, die im Unterschied zu Organoblechen nicht vollkonsolidiert vorliegen müssen, kann das Gewebe an die Werkzeugwand und damit an die Bauteiloberfläche gedrängt werden und freiliegen oder durch Fließeffekte verschoben werden. Insbesondere bei Stahlgeweben hat dies den Nachteil, dass durch freiliegenden Stahl Korrosionsprobleme auftreten können. Beim Überspritzen von Stahlgewebe ist zudem eine minimale Wandstärke notwendig, die deutlich größer ist als die Dicke des Gewebes, um ein vollständiges Umschließen des Gewebes mit dem Polymermaterial zu erhalten. Dies führt zu einer Vergrößerung der Materialmenge und damit zu Nachteilen bei Verwendung der faserverstärkten Polymere im Leichtbau.

Aufgabe der vorliegenden Erfindung ist es daher, ein Verfahren zur Herstellung von Formteilen aus faserverstärkten Polymeren bereitzustellen, das die Herstellung von Formteilen mit geringer Wandstärke erlaubt, und bei dem zudem die eingelegte Gewebe durch den Herstellprozess nicht verschoben werden. Weiterhin soll durch das Verfahren auch vermieden werden, dass Fasern freiliegen, und so, insbesondere bei Einsatz von Stahlfasern, zu Korrosionsproblemen führen.

Weiterhin ist es Aufgabe der Erfindung, ein Verfahren zur Herstellung von Halbzeugen für die Produktion der Formteile bereitzustellen.

Gelöst wird die Aufgabe durch ein Verfahren zur Herstellung eines Halbzeugs für die Herstellung von Formteilen aus einem faserverstärkten Polymeren, folgende Schritte umfassend:
(i) Einlegen einer Faserstruktur in ein Formwerkzeug und Umspritzen der Faserstruktur mit einer Polymervorläuferverbindung oder Tränken einer Faserstruktur mit einer Polymervorläuferverbindung, wobei die Polymervorläuferverbindung eine Viskosität von maximal 2000 mPas aufweist,
(ii) Einfrieren der Polymervorläuferverbindung zur Herstellung des Halbzeugs.

Aus dem Halbzeug lässt sich dann durch Ausreagieren der eingefrorenen Polymervorläuferverbindung zum Polymeren ein Formteil aus einem faserverstärkten Polymeren herstellen.

Die Herstellung des Halbzeugs hat den Vorteil, dass mit einer kürzeren Werkzeugbelegungszeit Vorprodukte hergestellt werden können. Diese können dann je nach Form des Halbzeugs auf Anforderung zu unterschiedlichen Formteilen weiterverarbeitet werden. So ist es zum Beispiel möglich, flache Halbzeuge zu produzieren, die sich platzsparender lagern lassen als die fertigen Formteile.

Alternativ ist es jedoch auch möglich, das Halbzeug bereits in der Gestalt des fertigen Formteils zu produzieren und nach dem Einfrieren, durch die eine stabile Form des Halbzeugs erzielt wird, außerhalb des Formwerkzeugs fertig auszupolymerisieren. Dies erlaubt ebenfalls eine kürzere Werkzeugbelegungszeit des

Formwerkzeugs, da die Herstellung des Halbzeugs im Werkzeug weniger Zeit benötigt als die Herstellung des auspolymerisierten Formteils.

Bevorzugt wird die Aufgabe gelöst durch ein Verfahren zur Herstellung von Formteilen aus einem faserverstärkten Polymeren gemäß Anspruch 3.

Sowohl für die Herstellung des Halbzeugs als auch für die Herstellung des Formteils ist es durch den Einsatz einer Polymervorläuferverbindung mit einer Viskosität von maximal 2000 mPas, bevorzugt maximal 1000 mPas und insbesondere einer Viskosität im Bereich von 5 bis 500 mPas möglich, das Einspritzen mit einem geringen Druck durchzuführen, so dass die eingelegte Faserstruktur durch den Einspritzvorgang nicht oder nur minimal verformt wird. Dies erlaubt weiterhin die Herstellung von Formteilen mit einer nur geringfügig größeren Dicke als die Dicke der Faserstruktur. Hierdurch kann weiteres Material eingespart werden, so dass insbesondere Teile hergestellt werden können, die den Anforderungen an Leichtbauteile genügen.

Ein weiterer Vorteil ist, dass durch die geringe Viskosität und die damit verbundene Möglichkeit, die Polymervorläuferverbindung mit nur einem geringen Druck einzuspritzen, eine vollständige Ummantelung der Faserstruktur erzielt wird, so dass insbesondere bei Einsatz von metallischen Faserstrukturen vermieden wird, dass Metallfasern nach der Herstellung des Bauteils frei liegen. Hierdurch wird die Gefahr von Korrosion der Metallteile umgangen.

Neben der Herstellung von fertigen Formteilen und von Halbzeugen, bei denen die Polymervorläuferverbindung eingefroren ist, ist es mit dem erfindungsgemäßen Verfahren auch möglich, Formteile als Halbzeuge mit vollständig auspolymerisierter Polymermatrix herzustellen. Wenn Halbzeuge mit vollständig auspolymerisierter Polymermatrix hergestellt werden, so wird als Polymervorläuferverbindung besonders bevorzugt eine solche eingesetzt, die zu einem thermoplastischen Polymeren reagiert. Ein Halbzeug aus einem thermoplastischen Polymeren hat den Vorteil, dass durch Erwärmung eine Umformung des Halbzeugs zum fertigen Bauteil möglich ist.

Neben der Herstellung von Halbzeugen ist jedoch auch die Herstellung von fertigen Formteilen möglich. Im Falle von fertigen Formteilen lässt sich als Polymervorläuferverbindung auch eine solche einsetzen, die zu einem duroplastischen Polymer reagiert.

Um eine ausreichende Formstabilität des Formteiles zu erhalten, ist die Faserstruktur vorzugsweise ein Gewebe, ein Gestrick, ein Gelege, eine unidirektionale oder bidirektionale Faserstruktur aus Endlosfasern oder umfasst ungeordnete Fasern. Insbesondere wenn die Faserstruktur ein Gelege ist, so können einzelne Fasern in mehreren Lagen aus parallelen Fasern angeordnet sein, wobei die einzelnen Lagen eine zueinander gedrehte Richtung aufweisen können. Hierbei ist es besonders bevorzugt, wenn die Fasern der einzelnen Lagen in einem Winkel von 30 bis 90° zueinander gedreht sind. Durch die zueinander gedrehte Ausrichtung der einzelnen Lagen zueinander wird eine Erhöhung der Zugfestigkeit des Formteiles in mehreren Richtungen erzielt. Bei einer unidirektionalen Ausrichtung wird insbesondere in Richtung der Faserausrichtung eine Erhöhung der Zugfestigkeit erzielt. Eine Erhöhung der Druckfestigkeit des Bauteiles aus dem Formteil wird auch quer zur Ausrichtung der Fasern erreicht.

Auch wenn die Faserstruktur ein Gewebe oder ein Gestrick umfasst, ist es möglich, mehrere Lagen oder nur eine Lage an Fasern vorzusehen. Bei einem Gewebe bedeutet mehrere Lagen, dass mehrere Gewebe übereinander angeordnet werden sollen. Entsprechendes gilt auch für eine Anordnung der Faserstruktur als Gestrick.

Geeignete Fasern, die zur Erhöhung der Stabilität der Formteile eingesetzt werden können, sind insbesondere Kohlenstofffasern, Glasfasern, Aramidfasern, Metallfasern, Polymerfasern, Kaliumtitanatfasern, Borfasern, Basaltfasern oder andere Mineralfasern. Besonders bevorzugt ist es, wenn zumindest ein Teil der eingesetzten Fasern Metallfasern sind. Als Metallfasern eignen sich insbesondere Fasern auf Basis von eisenhaltigen Metallen, insbesondere auf Basis von Stahl.

In einer besonders bevorzugten Ausführungsform enthält die Faserstruktur Stahlcords, Stahldrähte oder Stahlfasern. Hierbei kann die Faserstruktur ausschließlich Stahlcords, Stahldrähte oder Stahlfasern enthalten oder eine Mischung aus Stahlcords, Stahldrähten oder Stahlfasern und aus nichtmetallischen Fasern, besonders bevorzugt Kohlenstofffasern oder Glasfasern.

Der Einsatz von Stahlcords, Stahldrähten oder Stahlfasern hat den Vorteil, dass insbesondere eine hohe Zugfestigkeit der so hergestellten Formteile erzielt wird. Insbesondere bei Einsatz im Fahrzeugbau ist ein wesentlicher Vorteil der Verwendung von Stahlcords die Gewährleistung der Bauteilintegrität bei Zusammenstoß oder Aufprallbelastung, wo eine glas- oder carbonfaserverstärkte Struktur ihre Integrität verlieren würde.

Besonders bevorzugt ist es, zur Verstärkung eine Mischung aus Metallfasern und Kohlenstofffasern oder Glasfasern einzusetzen. In diesem Fall ist es zum Beispiel möglich, einzelne Stahlcords, Stahldrähte oder Stahlfasern mit Kohlenstofffasern oder Glasfasern zu verweben. Alternativ können auch unterschiedliche Fasern in Form eines Geleges in das Werkzeug eingelegt werden. Hierbei können die Fasern entweder alternierend oder in beliebiger statistisch verteilter Reihenfolge eingelegt werden. Auch ist es möglich, zum Beispiel Fasern aus jeweils einem Material in eine Richtung einzulegen und Fasern aus einem anderen Material in einer zu dieser Richtung gedrehten Richtung.

Insbesondere bei Einsatz von Stahlcords, Stahldrähten oder Stahlfasern ist es bevorzugt, wenn diese mit Glasfasern oder Kohlenstofffasern miteinander verwebt werden, um ein Gewebe zu erhalten. Eine gleichmäßige Verstärkung des Formteils kann dann zum Beispiel dadurch erzielt werden, dass die einzelnen Gewebe zueinander verdreht in mehreren Lagen angeordnet werden. So können zum Beispiel zwei Lagen, die zueinander um 90° verdreht sind, eingesetzt werden. Alternativ ist auch ein beliebiger anderer Winkel möglich. Auch können mehr als zwei Lagen eingesetzt werden.

Die Verwendung von Metallfasern, beispielsweise in Form von Stahlcords, Stahldrähten oder Stahlfasern zusammen mit Fasern aus einem anderen Material, beispielsweise Kohlenstofffasern oder Glasfasern, erlaubt es, dass Formteile mit einem verbesserten Versagensverhalten hergestellt werden. So kann zum Beispiel durch den Einsatz der Polymervorläuferverbindung, mit der die Faserstruktur umspritzt bzw. getränkt wird, erzielt werden, dass ein so hergestelltes Formteil nach einer mechanischen Beanspruchung weniger schnell durch Bruch versagt. Das Formteil kann somit eine höhere Last aufnehmen ohne zu versagen. Zudem ist es zum Beispiel möglich, thermoplastische Polymerbauteile herzustellen, die sowohl die Eigenschaften einer Kohlenstofffaserverstärkung als auch ein Deformationsverhalten wie ein Metall aufweisen.

In Abhängigkeit von dem herzustellenden Polymer ist die Polymervorläuferverbindung zum Beispiel Caprolactam, Laurinlactam, Cyclobutylenterephthalat oder cyclisches Polybutylenterephthalat. Weiterhin können auch Polymervorläuferverbindungen eingesetzt werden, die zu Polymethylmethacrylat, Polybutylenterephthalat, Polyethylenterephthalat, Polycarbonat, Polyetheretherketon, Polyetherketon, Polyethersulfon, Polyphenylensulfid, Polyethylennaphthalat, Polybutylennaphthalat oder Polyamid reagieren. Die Polymervorläuferverbindungen können dabei entweder Monomere oder Oligomere der herzustellenden Polymere sein. Wesentlich ist hierbei lediglich, dass die Polymervorläuferverbindung noch eine Viskosität von weniger als 2000 mPas aufweist. Besonders bevorzugt liegt die Viskosität der Polymervorläuferverbindung im Bereich von 5 bis 500 mPas, ganz besonders bevorzugt im Bereich von 5 bis 100 mPas.

Wenn als Polymervorläuferverbindung Caprolactam eingesetzt wird, ist es bevorzugt, wenn die Polymervorläuferverbindung beim Tränken und/oder Umspritzen der Faserstruktur eine Temperatur im Bereich von 100 bis 120 °C, bevorzugt im Bereich von 105 bis 115 °C aufweist. Eine entsprechende Temperatur der Polymervorläuferverbindung führt im Allgemeinen zu einer ausreichend geringen Viskosität, um ein gleichmäßiges Benetzen der Faserstruktur zu erzielen. Das Formwerkzeug, in das die Polymervorläuferverbindung eingespritzt wird, beziehungsweise in dem das Formteil ausgeformt wird, weist in diesem Fall vorzugsweise eine Temperatur im Bereich von 140 bis 180 °C, besonders bevorzugt im Bereich von 150 bis 160 °C auf.

Bei Einsatz von Cyclobutylenterephthalat als Polymervorläuferverbindung liegt die Temperatur, auf die das Formwerkzeug beheizt wird, vorzugsweise im Bereich von 180 bis 200°C. Bei Einsatz von zur Herstellung von Polyamid 12 eingesetzten Polymervorläuferverbindungen wird das Formteil vorzugsweise auf eine Temperatur im Bereich von 180 bis 240°C beheizt, bei Einsatz von zur Herstellung von Polyethylenterephthalat eingesetzten Polymervorläuferverbindungen auf eine Temperatur im Bereich von 250 bis 325°C, bei Einsatz von zur Herstellung von Polycarbonat eingesetzten Polymervorläuferverbindungen auf eine Temperatur im Bereich von 240 bis 280°C und bei Einsatz von zur Herstellung von Polyethylensulfon eingesetzten Polymervorläuferverbindungen auf ungefähr 300°C.

Durch den Einsatz der Polymervorläuferverbindung, mit der die Faserstruktur umspritzt bzw. getränkt wird, wird eine gleichmäßige vollständige Benetzung der Faserstruktur erzielt, wodurch ein Bauteil mit verbesserten Festigkeitseigenschaften hergestellt werden kann als dies bei herkömmlichen Verfahren der Fall ist, bei denen die Faserstruktur mit einem aufgeschmolzenen Polymeren umspritzt wird. Insbesondere wird durch den Einsatz der Polymervorläuferverbindung erreicht, dass die eingesetzte Faserstruktur vollständig von der Polymervorläuferverbindung und damit nach der Reaktion vom Polymeren benetzt wird.

Zur Einstellung der Eigenschaften des Polymeren kann die Polymervorläuferverbindung weiterhin noch Comonomere zur Herstellung eines Copolymeren oder Additive enthalten. Üblicherweise eingesetzte Additive sind zum Beispiel, Härter, Vernetzer, Weichmacher, Katalysatoren, Zähmodifikatoren, Haftvermittler, Füller, Entformungshilfsmittel, Blends mit anderen Polymeren, Stabilisatoren oder Mischungen zweier oder mehrerer dieser Komponenten. Comonomere oder Additive, die zur Einstellung der Eigenschaften des Polymeren eingesetzt werden können, sind dem Fachmann bekannt.

Um durch das erfindungsgemäße Verfahren ein formstabiles Formteil zu erhalten, ist es besonders bevorzugt, wenn das Formteil erst nach vollständiger Polymerisation aus dem Formwerkzeug entnommen wird. Nach vollständiger Polymerisation ist das Formteil formstabil, so dass keine Gefahr mehr besteht, dass das Formteil beim Entformen beschädigt, insbesondere verformt, wird.

Um eine vollständige Benetzung der Faserstruktur zu erhalten ist es möglich, die Faserstruktur vor dem Einlegen und Umspritzen in Schritt (a) beziehungsweise in Schritt (i) für die Herstellung eines Halbzeugs mit einer Polymervorläuferverbindung zu tränken. Durch das Tränken der Faserstruktur mit der Polymervorläuferverbindung wird eine vollständige Benetzung unabhängig vom nachfolgenden Formgebungsverfahren erzielt. Zusätzlich wird durch das Tränken der Faserstruktur mit der Polymervorläuferverbindung beim Umspritzen in Schritt (a) beziehungsweise (i) eine bessere Haftung der Polymervorläuferverbindung, mit der die Faserstruktur umspritzt wird, erzielt.

Insbesondere wenn die Faserstruktur vor dem Einlegen und Umspritzen in Schritt (a) beziehungsweise (i) mit einer Polymervorläuferverbindung getränkt wird, ist es möglich, zum Tränken und zum Umspritzen unterschiedliche Polymervorläuferverbindungen einzusetzen. In diesem Fall ist es jedoch im Allgemeinen notwendig, die Polymervorläuferverbindung, die zum Tränken der Faserstruktur eingesetzt wurde, zunächst auszuhärten und dann im nächsten Schritt die bereits getränkte und ausgehärtete Faserstruktur in das Formwerkzeug für das Umspritzen mit der nächsten Polymervorläuferverbindung einzulegen. Alternativ ist es auch möglich, ein Halbzeug mit eingefrorener Polymervorläuferverbindung zur Herstellung eines Formteils anschließend mit einer weiteren Polymervorläuferverbindung zu umspritzen.

Um eine verbesserte Haftung des Polymeren an der Faserstruktur zu erhalten, ist es weiterhin möglich, die Faserstruktur vor dem Umspritzen oder Tränken in Schritt (a) beziehungsweise (i) mit einer Grundierung vorzubehandeln. Die Grundierung kann dabei zum Beispiel auch als Haftmittler zwischen Faserstruktur und Polymeren dienen. Als Material für die Grundierung eignet sich zum Beispiel ein lösliches Polyamid. Dieses wird in Form der Lösung aufgebracht und anschließend das Lösungsmittel entfernt. Ein lösliches Polyamid eignet sich insbesondere dann, wenn durch das erfindungsgemäße Verfahren ein Formteil aus einem faserverstärkten Polyamid hergestellt werden soll.

Wenn die Faserstruktur zunächst mit einer Polymervorläuferverbindung getränkt wird, bevor die Faserstruktur in das Formwerkzeug zur Herstellung des Formteiles eingelegt wird, so ist es besonders vorteilhaft, wenn die in der Polymervorläuferverbindung enthaltenen Monomere nach dem Tränken und vor dem Einlegen der mit der Polymervorläuferverbindung getränkten Faserstruktur zumindest teilweise polymerisieren. Hierdurch wird ein Halbzeug erhalten, bei dem insbesondere vermieden wird, dass nicht ausgehärtete Monomere, mit denen die Faserstruktur getränkt worden ist, abgepresst werden und ablaufen können. Die gesamte Menge an Polymervorläuferverbindungen, mit der die Faserstruktur getränkt worden ist, bleibt in der Faserstruktur, beziehungsweise wird zur Ausformung des Bauteils verwendet. Hierdurch wird sichergestellt, dass durch das Tränken eine gleichmäße und vollständige Benetzung der Faserstruktur erhalten wurde. Durch Form und Ausprägung der Faserstruktur und/oder Füllung der Polymervorläuferverbindung können lokal unterschiedliche Fasergehalte oder Kombinationen eingestellt werden.

Das mit dem erfindungsgemäßen Verfahren hergestellte Formteil aus dem faserverstärkten Polymeren ist besonders vorteilhaft ein Strukturbauteil, eine Schottwand, eine Bodengruppe, ein Batterieträger, ein Seitenaufprallträger, ein Stoßfängersystem, ein Strukturinsert oder eine Säulenverstärkung in einem Kraftfahrzeug. Weiterhin eignet sich das faserverstärkte Polymere auch zur Herstellung von Seitenwänden, strukturellen Kotflügeln, Längsträgern oder oberen Längsträgern bzw. beliebigen anderen Bauteilen einer Fahrzeugkarosserie.

Die durch das erfindungsgemäße Verfahren hergestellten Bauteile zeichnen sich insbesondere dadurch aus, dass das Bauteil zum Beispiel nach einer mechanischen Beanspruchung, zum Beispiel nach einem Unfall mit einem Kraftfahrzeug, das ein Formteil aus faserverstärkten Polymeren enthält, besser zusammenhält. Bei auftretenden Brüchen wird der innere Zusammenhalt des Bauteils erhalten, die Bauteilintegrität bleibt erhalten. Plastische Verformung kann durch die Kombination von unverstärktem oder schwach verstärktem Polyamid mit Stahlcords ermöglicht werden. Eine plastische Verformung des Bauteils ohne Bruch hat den weiteren Vorteil, dass keine scharfkantigen Brüche entstehen, die zu Verletzungen führen können.

Insbesondere ist durch das erfindungsgemäße Verfahren möglich, Bauteile herzustellen, die sowohl Eigenschaften von herkömmlichen faserverstärkten Polymeren, insbesondere deren Druck- und Zugfestigkeit aufweisen und zusätzlich ein Deformationsverhalten näherungsweise wie ein metallisches Bauteil. Das Deformationsverhalten wie ein metallisches Bauteil wird insbesondere durch Einsatz von Metallfasern, insbesondere Steelcords, Stahldrähten oder Stahlfasern erzielt.

Um Formteile mit einer hochwertigen Oberfläche zu erhalten, ist es möglich, das Formteil mit einem so genannten in-mold coating zu versehen. Hierzu wird die Oberflächenbeschichtung des Bauteiles direkt im Werkzeug erzeugt. Im Unterschied zu üblichen Beschichtungsverfahren wird hierdurch eine gute Haftung des Beschichtungsmaterials am Formteil erhalten und damit eine besonders qualitativ hochwertige Beschichtung erzielt.

Neben der Herstellung von Bauteilen für ein Kraftfahrzeug eignet sich das erfindungsgemäße Verfahren auch zur Herstellung von Gehäusen zum Beispiel für eine Gesteinsmühle oder für die Herstellung eines Schutzkäfigs oder eines Gehäuses einer Drehmaschine oder einer Fräsmaschine. Weiterhin lassen sich mit dem erfindungsgemäßen Verfahren auch beliebige andere Formteile, zum Beispiel Gehäuse für Handgeräte herstellen. Hierbei ist besonders vorteilhaft, dass durch das erfindungsgemäße Verfahren Gehäuse hergestellt werden können, bei denen bei einer mechanischen Beanspruchung, zum Beispiel durch Herunterfallen, keine Teile des tragenden Gehäuses abbrechen.

### Beispiel

In ein Formwerkzeug zur Herstellung eines Formteils wird ein Gestrick aus Stahlfasern und Kohlenstofffasern eingelegt. Nach dem Schließen wird in das Werkzeug Caprolactam als Polymervorläuferverbindung mit einer Temperatur von 112 °C eingespritzt. Das Werkzeug wird auf eine Temperatur von 155 °C geheizt. Durch das Heizen des Werkzeuges härtet das Caprolactam zum korrespondierenden Polyamid aus. Die Viskosität des Caprolactams liegt bei Einspritztemperatur bei 5 mPas.

Nach einer Zeit von 2 bis 3 Minuten ist das Caprolactam so weit ausreagiert, dass das Formteil aus dem Formwerkzeug entnommen werden kann.

Das Polyamid, aus dem das Formteil gefertigt ist, weist eine Gasübergangstemperatur von 60 °C und eine Schmelztemperatur von 220 °C auf. Der E-Modul liegt bei 3400 MPa und die Bruchdehnung bei 20 Prozent.

Ein entsprechend hergestelltes Formteil zeichnet sich insbesondere dadurch aus, dass die vom Polymeren umhüllte Faserstruktur vollständig vom Polymeren bedeckt ist und keine Teile der Faserstruktur frei liegen. Zudem zeigt sich, dass sich die Faserstruktur innerhalb des Formteiles nicht verschiebt.

Der Anteil an Fasern bezogen auf das Gesamtvolumen des Formteils liegt bei bis zu 70 Vol.-Prozent.

## Patentansprüche

1. Verfahren zur Herstellung eines Halbzeugs für die Herstellung von Formteilen aus einem faserverstärkten Polymeren, folgende Schritte umfassend:
(i) Einlegen einer Faserstruktur in ein Formwerkzeug und Umspritzen der Faserstruktur mit einer Polymervorläuferverbindung oder Tränken einer Faserstruktur mit einer Polymervorläuferverbindung, wobei die Polymervorläuferverbindung eine Viskosität von maximal 2000 mPas aufweist,
(ii) Einfrieren der Polymervorläuferverbindung zur Herstellung des Halbzeugs.

2. Verfahren zur Herstellung eines Formteils aus einem faserverstärkten Polymeren, bei dem die Polymervorläuferverbindung eines nach Anspruch 1 hergestellten Halbzeugs nach dem Einfrieren zum Polymeren fertigreagiert.

3. Verfahren zur Herstellung von Formteilen aus einem faserverstärkten Polymeren, folgende Schritte umfassend:
(a) Einlegen eines nach Anspruch 1 gefertigten Halbzeugs in ein Formwerkzeug,
(b) Polymerisation der Polymervorläuferverbindung zum Polymeren zur Herstellung des Formteils,
(c) Entnehmen des Formteils aus dem Formwerkzeug sobald die Polymerisation zumindest so weit fortgeschritten ist, dass das Formteil im Wesentlichen formstabil ist.

4. Verfahren gemäß einem der Ansprüche 1 bis 3, **dadurch gekennzeichnet, dass** die Faserstruktur ein Gewebe, ein Gestrick, ein Gelege oder eine unidirektionale oder bidirektionale Faserstruktur aus Endlosfasern ist oder ungeordnete Faser umfasst.

5. Verfahren gemäß einem der Ansprüche 1 bis 4, **dadurch gekennzeichnet, dass** als Fasern für die Faserstruktur Kohlenstofffasern, Glasfasern, Aramidfasern, Metallfasern, Polymerfasern, Kaliumtitanatfasern, Borfasern, Basaltfasern oder Mineralfasern verwendet werden.

6. Verfahren gemäß einem der Ansprüche 1 bis 5, **dadurch gekennzeichnet, dass** die Faserstruktur Stahlcords, Stahldrähte oder Stahlfasern enthält, wobei die Faserstruktur vorzugsweise ein Gewebe oder ein Gestrick aus Stahlcords, Stahldrähten oder Stahlfasern und Kohlenstofffasern oder Glasfasern ist.

7. Verfahren gemäß einem der Ansprüche 1 bis 6, **dadurch gekennzeichnet, dass** die Polymervorläuferverbindung Caprolactam, Laurinlactam, Cyclobutylenterephthalat oder cyclisches Polybutylenterephthalat enthält oder dass die Polymervorläuferverbindung Monomere oder Oligomere zur Herstellung von Polymethylmethacrylat, Polybutylenterephthalat, Polyethylenterephthalat, Polycarbonat, Polyetheretherketon, Polyetherketon, Polyethersulfon, Polyphenylensulfid, Polyethylennaphthalat, Polybutylennaphthalat oder Polyamid umfasst.

8. Verfahren gemäß einem der Ansprüche 1 bis 7, **dadurch gekennzeichnet, dass** die Polymervorläuferverbindung weiterhin Comonomere zur Herstellung eines Copolymeren, Härter, Vernetzer, Weichmacher, Katalysator, Zähmodifikatoren, Haftvermittler, Füller, Entformungsmittel, Blends mit anderen Polymeren, Stabilisatoren oder Mischungen zweier oder mehrerer dieser Komponenten enthält.

9. Verfahren gemäß einem der Ansprüche 1 bis 8, **dadurch gekennzeichnet, dass** das Formteil aus dem Formwerkzeug nach vollständiger Polymerisation entnommen wird.

10. Verfahren gemäß einem der Ansprüche 1 bis 9, **dadurch gekennzeichnet, dass** die Faserstruktur vor dem Einlegen und Umspritzen in Schritt (a) mit einer Polymervorläuferverbindung getränkt wird.

11. Verfahren gemäß einem der Ansprüche 1 bis 10, **dadurch gekennzeichnet, dass** durch Form und Ausprägung der Faserstruktur und/oder Füllung der Polymervorläuferverbindung lokal unterschiedliche Fasergehalte oder Kombinationen eingestellt werden.

12. Verfahren gemäß einem der Ansprüche 1 bis 11, **dadurch gekennzeichnet, dass** die Faserstruktur vor dem Umspritzen oder Tränken in Schritt (a) mit einer Grundierung vorbehandelt wird.

13. Verfahren gemäß einem der Ansprüche 1 bis 12, **dadurch gekennzeichnet, dass** die in der Polymervorläuferverbindung enthaltenen Monomere nach dem Tränken und vor dem Einlegen der mit der Polymervorläuferverbindung getränkten Faserstruktur zumindest teilweise polymerisieren.

14. Verfahren gemäß einem der Ansprüche 1 bis 13, **dadurch gekennzeichnet, dass** das Formteil aus dem faserverstärkten Polymeren ein Strukturbauteil, eine Schottwand, eine Bodengruppe, ein Batterieträger, ein Seitenaufprallträger, ein Stoßfängersystem, ein Strukturinsert, eine Säulenverstärkung, eine Seitenwand, ein struktureller Kotflügel, ein Längsträger oder ein oberer Längsträger eines Kraftfahrzeugs ist.

15. Verfahren gemäß einem der Ansprüche 1 bis 14, **dadurch gekennzeichnet, dass** das Formteil aus dem faserverstärkten Polymeren ein Gehäuse einer Gesteinsmühle oder ein Schutzkäfig oder Gehäuse einer Drehmaschine oder Fräsmaschine oder ein Gehäuse eines Handgerätes ist.

## Claims

1. A process for producing a semifinished product for producing moldings made of a fiber-reinforced polymer, comprising the following steps:
(i) inserting a fiber structure into a mold and injecting a polymer precursor compound around the fiber structure or saturating a fiber structure with a polymer precursor compound, where the viscosity of the polymer precursor compound is at most 2000 mPas,
(ii) freezing the polymer precursor compound to obtain the semifinished product.

2. A process for producing a molding made of a fiber-reinforced polymer, in which the polymer precursor compound of a semifinished product produced according to claim 1 is reacted to completion to give the polymer after the freezing process.

3. A process for producing moldings made of a fiber-reinforced polymer, comprising the following steps:
(a) inserting a semifinished product manufactured according to claim 1 into a mold,
(b) polymerizing the polymer precursor compound to give the polymer, to produce the molding,
(c) removing the molding from the mold as soon as the polymerization process has proceeded at least to the extent that the molding is in essence dimensionally stable.

4. The process according to any of claims 1 to 3, wherein the fiber structure is a woven, a knit, a laid scrim, or a unidirectional or bidirectional fiber structure made of continuous fibers, or comprises unordered fibers.

5. The process according to any of claims 1 to 4, wherein fibers used for the fiber structure comprise carbon fibers, glass fibers, aramid fibers, metal fibers, polymer fibers, potassium titanate fibers, boron fibers, basalt fibers, or mineral fibers.

6. The process according to any of claims 1 to 5, wherein the fiber structure comprises steel cords, steel wires, or steel fibers, where the fiber structure is preferably a woven or a knit made of steel cords, steel wires, or steel fibers, and carbon fibers, or glass fibers.

7. The process according to any of claims 1 to 6, wherein the polymer precursor compound comprises caprolactam, laurolactam, cyclobutylene - terephthalate, or cyclic polybutylene terephthalate or wherein the polymer precursor compound comprises monomers or oligomers for producing polymethyl methacrylate, polybutylene terephthalate, polyethylene terephthalate, polycarbonate, polyether ether ketone, polyether ketone, polyether sulfone, polyphenylene sulfide, polyethylene naphthalate, polybutylene naphthalate, or polyamide.

8. The process according to any of claims 1 to 7, wherein the polymer precursor compound further comprises comonomers for producing a copolymer, hardeners, crosslinking agents, plasticizers, catalysts, impact modifiers, adhesion promoters, fillers, mold-release agents, blends with other polymers, stabilizers, or a mixture of two or more of said components.

9. The process according to any of claims 1 to 8, wherein the molding is removed from the mold after complete polymerization.

10. The process according to any of claims 1 to 9, wherein, prior to the insertion and injection process in step (a), the fiber structure is saturated with a polymer precursor compound.

11. The process according to any of claims 1 to 10, wherein local differences in fiber contents or in combinations are established by varying the shape and nature of the fiber structure and/or varying the way in which the polymer precursor compound is charged.

12. The process according to any of claims 1 to 11, wherein the fiber structure is pretreated with a primer prior to the injection process or saturation process in step (a).

13. The process according to any of claims 1 to 12, wherein the monomers comprised in the polymer precursor compound polymerize at least to some extent after the saturation process and prior to insertion of the fiber structure saturated with the polymer precursor compound.

14. The process according to any of claims 1 to 13, wherein the molding made of the fiber-reinforced polymer is a structural component, a bulkhead, a floor assembly, a battery holder, a side-impact member, a bumper system, a structural insert, column reinforcement, a side wall, a structural wheel surround, a longitudinal member, or an upper longitudinal member of a motor vehicle.

15. The process according to any of claims 1 to 14, wherein the molding made of the fiber-reinforced polymer is a housing of a stone mill, or is a protective cage or housing for a turning machine or for a milling machine, or is a housing for a handheld device.

## Revendications

1. Procédé pour la fabrication d'un produit semi-fini pour la fabrication de pièces façonnées en un polymère renforcé par des fibres, comprenant les étapes suivantes :
(i) introduction d'une structure fibreuse dans un outil de moulage et enrobage de la structure fibreuse par injection d'un composé précurseur de polymère ou imprégnation d'une structure fibreuse par un composé précurseur de polymère, le composé précurseur de polymère présentant une viscosité d'au maximum 2000 mPa.s,
(ii) figeage du composé précurseur de polymère pour la fabrication du produit semi-fini.

2. Procédé pour la fabrication d'une pièce façonnée en un polymère renforcé par des fibres, dans lequel le composé précurseur de polymère d'un produit semi-fini fabriqué selon la revendication 1 réagit en polymère fini après le figeage.

3. Procédé pour la fabrication de pièces façonnées en un polymère renforcé par des fibres, comprenant les étapes suivantes :
(a) introduction d'un produit semi-fini réalisé selon la revendication 1 dans un outil de moulage,
(b) polymérisation du composé précurseur de polymère en polymère pour la fabrication du produit semi-fini,
(c) prélèvement de la pièce façonnée de l'outil de moulage dès que la polymérisation a évolué au moins jusqu'à ce que la pièce façonnée soit essentiellement de forme stable.

4. Procédé selon l'une quelconque des revendications 1 à 3, **caractérisé en ce que** la structure fibreuse est un tissu, un tricot, un non-tissé ou une structure fibreuse unidirectionnelle ou bidirectionnelle en fibres continues ou comprend des fibres non ordonnées.

5. Procédé selon l'une quelconque des revendications 1 à 4, **caractérisé en ce qu'**on utilise, comme fibres pour la structure fibreuse, des fibres de carbone, des fibres de verre, des fibres d'aramide, des fibres métalliques, des fibres polymères, des fibres de titanate de potassium, des fibres de bore, des fibres de basalte ou des fibres minérales.

6. Procédé selon l'une quelconque des revendications 1 à 5, **caractérisé en ce que** la structure fibreuse contient des câblés d'acier, des fils d'acier ou des fibres d'acier, la structure fibreuse étant de préférence un tissu ou un tricot en câblés d'acier, en fils d'acier ou en fibres d'acier et en fibres de carbone ou en fibres de verre.

7. Procédé selon l'une quelconque des revendications 1 à 6, **caractérisé en ce que** le composé précurseur de polymère contient du caprolactame, du lactame laurique, du téréphtalate de cyclobutylène ou du poly(téréphtalate de butylène) cyclique ou **en ce que** le composé précurseur de polymère comprend des monomères ou des oligomères pour la préparation de poly(méthacrylate de méthyle), de poly(téréphtalate de butylène), de poly(téréphtalate d'éthylène), de polycarbonate, de polyétheréthercétone, de polyéthercétone, de polyéthersulfone, de poly(sulfure de phénylène), de poly(naphtalate d'éthylène), de poly(naphtalate de butylène) ou de polyamide.

8. Procédé selon l'une quelconque des revendications 1 à 7, **caractérisé en ce que** le composé précurseur de polymère contient en outre des comonomères pour la préparation d'un copolymère, des durcisseurs, des réticulants, des plastifiants, un catalyseur, des modificateurs de la ténacité, des promoteurs d'adhérence, des charges, des agents de démoulage, des mélanges avec d'autres polymères, des stabilisateurs ou des mélanges de deux de ces composants ou plus.

9. Procédé selon l'une quelconque des revendications 1 à 8, **caractérisé en ce que** la pièce façonnée est prélevée de l'outil de moulage après polymérisation complète.

10. Procédé selon l'une quelconque des revendications 1 à 9, **caractérisé en ce que** la structure fibreuse est imprégnée d'un composé précurseur de polymère avant l'introduction et l'enrobage par injection dans l'étape (a).

11. Procédé selon l'une quelconque des revendications 1 à 10, **caractérisé en ce que** des teneurs différentes en fibres ou des combinaisons différentes sont réglées localement par la forme et l'aspect de la structure fibreuse et/ou la charge du composé précurseur de polymère.

12. Procédé selon l'une quelconque des revendications 1 à 11, **caractérisé en ce que** la structure fibreuse est prétraitée par un apprêt avant l'enrobage par injection ou l'imprégnation dans l'étape (a).

13. Procédé selon l'une quelconque des revendications 1 à 12, **caractérisé en ce que** les monomères contenus dans le composé précurseur de polymère polymérisent au moins partiellement après l'imprégnation et avant l'introduction de la structure fibreuse imprégnée du composé précurseur de polymère.

14. Procédé selon l'une quelconque des revendications 1 à 13, **caractérisé en ce que** la pièce moulée en polymère renforcé par des fibres est un élément structural, une cloison de séparation, un plancher, un support de batterie, une barre de renfort latérale, un système d'absorption des chocs, un insert structural, un renfort de colonne, une paroi latérale, un garde-boue structural, un longeron ou un longeron supérieur d'un véhicule automobile.

15. Procédé selon l'une quelconque des revendications 1 à 14, **caractérisé en ce que** la pièce moulée en polymère renforcé par des fibres est un carter d'un broyeur de roche ou une cage de protection ou un carter d'un tour ou d'une fraiseuse ou un boîtier d'un appareil portatif.
